# EUROPÄISCHE PATENTSCHRIFT

(11) **EP 0 369 259 B1**
(45) Veröffentlichungstag und Bekanntmachung des Hinweises auf die Patenterteilung: **25.01.1995**
(21) Anmeldenummer: 89120411.7
(22) Anmeldetag: 04.11.1989
(51) Int. Cl.: C08L 83/04

(54) **Kaltvulkanisierbare Siliconkautschukmasse, Verfahren zu ihrer Herstellung und Verwendung**
Cold vulcanisable silicone rubber compositions, process for preparing these and their use
Caoutchouc de silicone, vulcanisable à froid, procédé pour sa préparation et son emploi

(30) Priorität: 12.11.1988 DE 3838412
(43) Veröffentlichungstag der Anmeldung: 23.05.1990
(73) Patentinhaber: ARA-WERK KRÄMER GMBH, D-72669 Unterensingen (DE)
(72) Erfinder: Mueller, Dieter, D-7440 Nuertingen (DE); Koerner, Dieter, D-7446 Oberboihingen (DE)
(74) Vertreter: Patentanwälte Ruff, Beier, Schöndorf und Mütschele

(56) Entgegenhaltungen:
- DE-A- 1 910 014
- DE-A- 2 018 071
- FR-A- 2 272 145
- GB-A- 1 020 502
- GB-A- 2 067 212
- US-A- 3 847 848
- US-A- 4 532 315

## Beschreibung

Die Erfindung betrifft eine kaltvulkanisierbare Siliconkautschukmasse aus zwei getrennt voneinander aufbewahrten Komponenten A und B gemäß Oberbegriff des Hauptanspruchs 1, ein Verfahren zu ihrer Herstellung und die Verwendung der Siliconkautschukmasse.

Siliconkautschukmassen enthalten Polydiorganosiloxane als Grundpolymere. Diese weisen Gruppen auf, die Vernetzungsreaktionen zugänglich sind. Solche Gruppen können beispielsweise Wasserstoffatome, Hydroxyl- oder Vinylgruppen sein. Diese Gruppen befinden sich meist an den Kettenenden der Grundpolymere. Nach der bei der Vernetzung vorliegenden Temperatur unterscheidet man zwischen heiß- und kaltvulkanisierenden Siliconkautschukmassen. Bei den kalthärtenden Massen lassen sich Ein- und Zweikomponenten-Systeme unterscheiden. Dabei werden die kalthärtenden Zweikomponenten-Systeme oft mit Kieselsäureestern in Verbindung mit hochreaktiven Katalysatoren vernetzt. Die kalthärtenden Einkomponenten-Systeme kondensieren dagegen langsam bei Raumtemperatur unter dem Einfluß von Luftfeuchtigkeit. Dabei erfolgt die Vernetzung durch Kondensation von SiOH-Gruppen unter Bildung von Si-O-Si-Bindungen. Die Si-OH-Gruppen bilden sich durch Hydrolyse von Si-X-Gruppen, die bei der Herstellung des Einkomponenten-Systems aus einem Siliconpolymer mit endständigen OH-Gruppen und einem sogenannten "Vernetzer" RSiX₃ bzw. SiX₄ entstehen.

Bei solchen kaltaushärtenden Siliconmassen stellt sich einerseits das Problem, daß diese Massen zu langsam aushärten, und andererseits, daß bei solchen Einkomponenten-Systemen eine größere Schrumpfung der Masse als bei Zweikomponenten-Systemen auftritt. So beträgt die Aushärtungsgeschwindigkeit solcher Massen lediglich 1 bis 2 mm/Tag, was eine zu langsame Geschwindigkeit darstellt, vor allem, wenn Querschnitte größer als 5 mm verwendet werden. Dies führt bei der Anwendung in der Industrie oder im Bau zur Gefahr von Frühschäden. Außerdem treten gerade bei größeren Dicken der Massen starke Volumenschrumpfungen auf. Die Verwendung von kalthärtenden Einkomponenten-Systemen ist aber erwünscht, da sie verarbeitungsfertig und dabei einfacher zu handhaben sind und bessere Hafteigenschaften aufweisen.

Die europäische Patentschrift 0 118 325 macht den Vorschlag, einer Organopolysiloxan-Masse als Härtungsbeschleuniger wasserfreie oder wasserhaltige Alkali- oder Erdalkalihydroxide beizumischen. Die Aufgabe der zugegebenen Beschleuniger besteht darin, daß sie aufgrund ihrer Basizität die während der Vernetzung gebildeten Säuren neutralisieren. Die nach dieser Patentschrift hergestellten Massen besitzen jedoch keine höhere mechanische Festigkeit im Vergleich mit Massen, die durch Luftfeuchtigkeit ausgehärtet werden.

In der GB-A-1 020 502 ist eine kaltvulkanisierbare Siliconkautschukmasse beschrieben, wie sie im Oberbegriff des Anspruchs 1 dargestellt ist. Als Vernetzer werden dabei Trialkoxysilane verwendet, so daß es bei der Herstellung einer Komponente A erforderlich ist, den bei der erfolgenden Kondensationsreaktion entstehenden Chlorwasserstoff abzufangen. Außerdem muß diese Kondensationsreaktion bei erhöhter Temperatur durchgeführt werden.

Die DE-A-19 10 014 zeigt ein typisches Einkomponenten-System, wie es bereits diskutiert wurde. In dieser Druckschrift werden eine Vielzahl möglicher Vernetzer mit hydrolysierbaren Gruppen aufgeführt, wobei Acyloxy- und Aminogruppen als bevorzugt genannt sind.

In der US-A-3 847 848 ist ebenfalls ein Zweikomponenten-System offenbart, bei dem u.a. ein Alkoxygruppen aufweisendes Organopolysiloxan eingesetzt wird.

Die vorliegende Erfindung stellt sich die Aufgabe, eine schnellhärtende, kaltvulkanisierbare Siliconkautschukmasse mit guten Hafteigenschaften zur Verfügung zu stellen.

Diese Aufgabe wird durch eine kaltvulkanisierbare Siliconkautschukmasse mit den Merkmalen des Anspruchs 1 gelöst. Bevorzugte Ausführungsformen sind in den Unteransprüchen 2 bis 11 beschrieben.

Die kaltvulkanisierbare Siliconkautschukmasse gemäß der Erfindung besteht aus zwei getrennt voneinander aufbewahrten Komponenten A und B. Dabei ist die Komponente A ein Reaktionsprodukt aus einem bifunktionellen Siliconpolymer mit endständigen Hydroxylgruppen und einem im Verhältnis zum Siliconpolymer stöchiometrisch im Überschuß eingesetzten Vernetzer. Gegebenenfalls enthält die Komponente A mindestens einen weiteren Zusatz aus der Gruppe Siliconweichmacher, Füllstoffe, Farbstoffe, Katalysatoren, Stabilisatoren, Haftvermittler und Emulgatoren. Die Komponente B enthält mindestens einen Hydroxylgruppen aufweisenden Bestandteil, von dem mindestens ein Bestandteil ein bifunktionelles Siliconpolymer mit freien Hydroxylgruppen ist. Das nach der Erfindung verwendete bifunktionelle, vorzugsweise liniare Siliconpolymere enthält an jedem Ende mindestens eine freie Hydroxylgruppe. Bei der erfindungsgemäßen Siliconkautschukmasse werden als Vernetzer zur Herstellung der Komponente A Oximosilane verwendet, wie sie beispielsweise zur Herstellung von RTV-Silicon-Kautschuken bekannt sind. Schließlich verbleibt bei der Erfindung der bei der Herstellung der Komponente A eingesetzte Überschuß an Vernetzer in der Komponente A, um bei der späteren Umsetzung mit der Komponente B zur Verfügung zu stehen.

Bei der Erfindung ist die Komponente B für die Aushärtung der Kautschukmasse verantwortlich. Komponente B stellt also den sog. "Härter" dar. Die Vernetzung der Siliconkautschukmasse erfolgt bei der Erfindung mit Hilfe eines sog. "Vernetzers", der endständige funktionelle Gruppen besitzt. Dieser Vernetzer ist im Verhältnis zum Siliconpolymer stöchiometrisch im Überschuß vorhanden, damit sämtliche freie Hydroxylgruppen des Siliconpolymers der Komponente A intermediär vollständig zu Si-X-Gruppen reagieren können, wobei X die funktionelle Gruppe des Vernetzers ist. Die reaktiven SiOH-Gruppen werden dann erst bei der Aushärtung der Kautschukmasse durch Hydrolyse gebildet.

Erfindungsgemäß bevorzugt sind Siliconpolymere mit je einer Hydroxylgruppe an jedem Ende. Weiterhin ist es beispielsweise möglich, verschiedene Siliconpolymere mit freien Hydroxylgruppen nebeneinander in den Komponenten A und B zu verwenden.

Zur Aushärtung der erfindungsgemäßen Siliconkautschukmasse ist Luftfeuchtigkeit nicht erforderlich, da eine Aushärtung mit dem Siliconpolymer der Komponente B, das freie Hydroxylgruppen aufweist, möglich ist. Die beiden Komponenten A und B sind nach der Erfindung in einem Temperaturbereich von 5 °C bis 40 °C leicht miteinander vermischbar. Eine Aushärtung der Siliconkautschukmasse erfolgt auch bei eventuellen Mischfehlern auf jeden Fall, da die Komponente A alleine wie eine Einkomponenten-Siliconmasse mit Luftfeuchtigkeit aushärtbar ist. Die Siliconkautschukmasse nach der Erfindung weist einen geringeren Schwund gegenüber solchen Massen auf, die durch Luftfeuchtigkeit ausgehärtet werden. Durch die schnelle Aushärtung können die Massen kurz nach ihrer Verwendung mechanisch beansprucht werden.

Es ist nach der Erfindung bevorzugt, wenn der zur Herstellung der Komponente A eingesetzte Vernetzer in einer solchen Menge vorgesehen ist, daß die in den Komponenten A und B enthaltenen Siliconpolymere vollständig umsetzbar sind. Mit anderen Worten ist der in der Komponente A enthaltene Vernetzer vorzugsweise in einem solchen Überschuß enthalten, daß er insgesamt mindestens zur vollständigen Umsetzung der Siliconpolymere der Komponenten A und B ausreicht. Dadurch kann der Vernetzer nicht nur die in der Komponente A enthaltene Menge an Siliconpolymer, sondern auch die in Komponente B enthaltene Menge mit Hilfe seiner funktionellen Gruppe umsetzen.

Es ist nach der Erfindung bevorzugt, daß die Komponente B in ihrem Hydroxylgruppen aufweisenden Bestandteil zusätzlich Wasser enthält. Eine besonders bevorzugte Ausführungsform der Erfindung liegt dann vor, wenn der Hydroxylgruppen aufweisende Bestandteil der Komponente B ausschließlich aus einem Siliconpolymer mit freien Hydroxylgruppen und Wasser besteht. Dabei kann das Wasser, das in dem OH-Gruppen aufweisenden Bestandteil der Komponente B enthalten ist, direkt im Siliconpolymer der Komponente B gelöst bzw. emulgiert sein. Auf diese Weise ist eine direkte Zugabe des Siliconpolymers mit dem Wasser möglich. Das Siliconpolymer der Komponente B dient dabei als Dispersionsmittel für das Wasser, wodurch ein einfaches Einmischen des Wassers in die Komponente A möglich ist. Gleichzeitig reagiert das Siliconpolymer in Konkurrenz zum Wasser mit Reaktionsprodukt und dem überschüssigen Vernetzer der Komponente A.

Bei der erfindungsgemäßen Siliconkautschukmasse sind zur Herstellung der Komponenten A und/oder B Siliconpolymere bevorzugt, die flüssig sind. Diese Siliconpolymere weisen insbesondere eine Viskosität zwischen ungefähr 1000 und 1.000.000 mPa · s (23 °C) auf und sind mit den weiteren Bestandteilen zur Herstellung der Siliconkautschukmasse leicht mischbar.

Eine bevorzugte Ausführungsform der Erfindung liegt dann vor, wenn bei der Herstellung der Komponenten A und B das gleiche Siliconpolymere mit freien Hydroxylgruppen verwendet wird.

Wie erwähnt werden bei der Erfindung Oximosilane als Vernetzer verwendet. Ein Abfangen saurer oder basischer Reaktionsprodukte ist nicht erforderlich.

Bei den genannten Zusätzen können als Siliconweichmacher zum Beispiel Siliconöle vorgesehen sein, die frei von Hydroxylgruppen sind. Als Füllstoffe können beispielsweise Kieselerde, Calciumcarbonat, gebrannter Ton, sowie verschiedene Oxide, wie Eisen-, Zirkonium-, Magnesiumoxid und dergleichen eingesetzt werden. Als Katalysatoren werden der Komponente A vorzugsweise zinnorganische Verbindungen oder Metallsalze von Carbonsäuren zugesetzt, während als Stabilisatoren Salze der seltenen Erden oder auch Titan- und Eisenoxide Verwendung finden können. Die Siliconkautschukmasse nach der Erfindung kann in ihrer Komponente A weiterhin Zusätze enthalten, die die Flammfestigkeit der Masse verbessern. Da die möglichen Zusätze der Komponente A entweder teilweise oder in ihrer Gesamtheit schon in handelsüblichen Einkomponenten-Systemen zur Herstellung von kalthärtenden Siliconkautschukmassen enthalten sind, ist es nach der Erfindung möglich, jedes handelsübliche Einkomponenten-System als Komponente A zu verwenden. Die handelsüblichen Einkomponenten-Systeme können unverändert als Komponente A eingesetzt und müssen nicht erst durch Mischen hergestellt werden.

Entsprechend der möglichen Zugabe von Farbstoffen in die Komponente A ist es erfindungsgemäß vorteilhaft, wenn die Komponente B zusätzlich eine Farbe enthält. Die Zugabe des Farbstoffes in die Komponente A bzw. in die Komponente B dient einerseits der Einfärbung der Siliconkautschukmasse.

Je nachdem, ob und wieviel Farbstoff bzw. Farbpaste in die einzelne Komponente gegeben wird, ist andererseits bei der Verarbeitung auch eine Kontrolle darüber möglich, ob die Vermischung der Siliconkautschukmassen gleichmäßig und vollständig ist. Weiterhin ist es möglich, anhand der Farbintensität bzw. dem Farbton festzustellen, ob die Dosierung der relativen Mengen der Komponenten A und B richtig erfolgt ist.

Die Siliconkautschukmasse nach der Erfindung ist insbesondere dadurch gekennzeichnet, daß das Siliconpolymer der Komponente B mindestens 0,5 Gew.% Wasser enthält. Dabei kann das Wasser beispielsweise in einer Menge von 0,5 bis 5 Gew.%, vorzugsweise 1 bis 2 Gew.% vorliegen.

Bei einer bevorzugten Ausführungsform der Siliconkautschukmasse liegen ihre Komponenten A und B in einem Mengenverhältnis von 20:1 bis 1:1, insbesondere in einem Mengenverhältnis von 10:1 bis 10:6 vor. Da das Mischungsverhältnis in weiten Grenzen verändert werden kann, ist eine Einstellung der mechanischen Eigenschaften der Siliconkautschukmasse je nach Anwendungserfordernis möglich. Ein weiterer Vorteil der erfindungsgemäßen Siliconkautschukmasse liegt darin, daß auch dann eine Aushärtung der Masse eintritt, wenn zu wenig Komponente B zugegeben oder im Extremfall die Zugabe der Komponente B ganz vergessen wird. Da die Komponente A auch von alleine aushärten kann, findet in einem solchen Fall nämlich eine Aushärtung mit Luftfeuchtigkeit statt.

Die Siliconkautschukmasse nach der Erfindung kann insbesondere so ausgebildet sein, daß sie sich in einer gemeinsamen Verpackung mit zwei Kammern befindet. Diese zwei Kammern können innerhalb einer baulichen Einheit, wie beispielsweise einer Zweikammer-Kartusche oder einem Doppelkammerbeutel verwirklicht sein. Die Ausgänge der beiden Kammern in der Verpackung vereinigen sich, so daß ein gemeinsamer Austritt der Masse aus der Verpackung möglich ist. Dabei befindet sich üblicherweise die Komponente A der Masse in der einen Kammer und die Komponente B der Masse in der anderen Kammer. Bei einer solchen Verpackung kann es sich insbesondere um einen Schlauchbeutel, der in axialer Richtung im Volumen-Verhältnis der Komponenten A und B geteilt ist, handeln. Bezüglich der Ausgestaltung eines solchen Schlauchbeutels wird hier ausdrücklich auf die ältere deutsche Patentanmeldung P 38 15 414.5 bzw. ihre Offenlegungsschrift verwiesen. Nach der Erfindung ist es weiterhin möglich, daß eine Vereinigung der beiden Komponenten A und B nicht bei Austritt aus der Verpackung erfolgt, sondern daß die Vereinigung so vorgesehen. ist, daß die eine Komponente in die andere Komponente eingespritzt wird. Vorteilhafterweise wird dabei die Komponente B in die Komponente A eingespritzt, da die Komponente B üblicherweise ein kleineres Volumen einnimmt.

Ein bevorzugtes Verfahren zur Herstellung einer kaltvulkanisierbaren Siliconkautschukmasse nach der Erfindung ist in Anspruch 12 beschrieben. Dabei werden in einem ersten Schritt das bifunktionelle Siliconpolymer mit freien Hydroxylgruppen, der im Verhältnis zum Siliconpolymer stöchiometrisch im Überschuß vorhandene Vernetzer und ggf. die weiteren Zusätze miteinander vermischt und diese Mischung wird in einem abgetrennten Teil einer Verpackung mit zwei Kammern eingebracht. In einem zweiten Verfahrensschritt wird getrennt davon ein bifunktionelles Siliconpolymer mit mindestens zwei freien Hydroxylgruppen vorgelegt und gegebenenfalls mit Wasser und/oder gegebenenfalls mit Farbpaste, vermischt und diese Mischung wird in den anderen Teil der Verpackung eingebracht. Bei diesem Verfahren sind die beiden Teile der Verpackung entsprechend dem Volumen-Verhältnis der Mischungen ausgebildet. Die Vermischung der einzelnen Bestandteile zu den Komponenten A und B kann beispielsweise mit mechanischen oder statischen Mischern erfolgen. Die Vermischung der beiden Komponenten A und B erfolgt erst unmittelbar vor der Verwendung der Siliconkautschukmasse. Die sog. "Topfzeit" nach Vermischen der beiden Komponenten A und B kann durch die Zusammensetzung und durch das Mischungsverhältnis eingestellt werden und liegt normalerweise zwischen 4 und 20 Minuten.

Die erfindungsgemäßen Siliconkautschukmassen können insbesondere als Dichtungs-, Beschichtungs- und Verbindungsmassen verwendet werden. Sie sind beispielsweise für das Schließen von Fugen, die Verbindung von verschiedenen Materialien, z.B. das Aufkleben von Kfz.-Scheinwerfergläsern, sowie die Umhüllung von elektrischen Leitern oder elektronischen Bauteilen geeignet. Die Verwendung der Massen erfolgt bevorzugt aus einer Mehrkomponenten-Austragevorrichtung, wie sie beispielsweise eine pneumatische Spritzpistole darstellt. Ein solcher Austrag kann kontinuierlich oder diskontinuierlich erfolgen.

Weitere Merkmale und Einzelheiten der Erfindung ergeben sich der nachfolgenden Beschreibung von bevorzugten Ausführungsformen in Verbindung mit den Unteransprüchen.

### Ausführungsbeispiel 1

Erfindungsgemäß wird eine transparente Siliconkautschukmasse aus zwei Komponenten A und B hergestellt.

Komponente A ist erhältlich durch Vermischen von
51 % Siliconpolymer (farblose Flüssigkeit, Viskosität ca. 145.000 mPa · s)
32,2 % Siliconweichmacher
5,5 % Oximosilan-Vernetzer
1,8 % Silanhaftvermittler
9,4 % Pyrogene Kieselsäure
0,1 % Katalysator.

Die Komponente B besteht aus dem Siliconpolymeren, wie es auch in der Komponente A verwendet wird, und besitzt einen Wassergehalt von 0,5 %.

Zur Verarbeitung werden die beiden Komponenten A und B bei Raumtemperatur in einem Mengenverhältnis von 10:5 vermischt. Unmittelbar nach dem Vermischen wird die entstandene Masse in einer Dicke von ungefähr 5 mm und einer Fläche von ungefähr 10 x 10 cm auf eine Glasplatte aufgebracht. Bereits nach 2 - 3 Stunden bildet sich eine mechanisch beanspruchbare Masse, die nach einem Tag vollständig ausgehärtet ist. Die entstandene Siliconkautschukmasse weist eine hohe mechanische Festigkeit auf. Trotz der großvolumigen Anwendung ist praktisch kein Schwund festzustellen.

### Ausführungsbeispiel 2

Erfindungsgemäß wird eine undurchsichtige bzw. eingefärbte Siliconkautschukmasse aus zwei Komponenten A und B hergestellt.

Komponente A ist erhältlich durch Vermischen von
35 % Siliconpolymer (farblose Flüssigkeit, Viskosität ca. 145.000 mPa · s)
15 % Siliconweichmacher
5 % Oximosilan-Vernetzer
1 % Silanhaftvermittler
5 % Pyrogene Kieselsäure
38,9 % Füllstoffe
0,2 % Katalysator.

Als Komponente B wird die Komponente des Ausführungsbeispiels 1 verwendet.

Die Komponenten A und B werden bei Raumtemperatur in einem Mengenverhältnis von 10:4 vermischt und in gleicher Weise wie in Ausführungsbeispiel 1 auf eine Glasplatte aufgebrachte Bereits nach einer Stunde bzw. nach einem Tag erhält man eine mechanisch beanspruchbare bzw. voLlständig ausgehärtete Masse. Diese Masse weist die gleichen vorteilhaften Eigenschaften auf wie die Masse nach dem Ausführungsbeispiel 1.

### Ausführungsbeispiel 3

Die entsprechend den Ausführungsbeispielen 1 und 2 hergestellten Komponenten A und B werden in die beiden Kammern eines Schlauchbeutels gefüllt, der in axialer Richtung im Volumenverhältnis der Komponenten A und B unterteilt ist. Dieser Schlauchbeutel wird in eine pneumatische Spritzpistole, die für den Austrag aus Schlauchbeutelpackungen eingerichtet ist und eine Mischeinrichtung aufweist, überführt. Anschließend werden mit Hilfe dieser Spritzpistole Fugen unterschiedlicher Größe und Tiefe mit der Siliconkautschukmasse nach der Erfindung abgedichtet. Es ist ohne weiteres möglich, Fugen mit einer Breite von mehr als 2 cm und einer Tiefe von mehr als 5 cm mit der erfindungsgemäßen Siliconkautschukmasse abzudichten. Die Dichtungen härten bereits nach kurzer Zeit (1 Tag) aus und weisen gegenüber Dichtungen, die mit Hilfe von Luftfeuchtigkeit ausgehärtet sind, eine höhere mechanische Festigkeit und einen geringeren Schwund auf. Außerdem sind die Dichtungen nach der Erfindung praktisch porenfrei.

Die positiven Ergebnisse der Erfindung lassen sich auch auf andere Siliconpolymere mit anderen Viskositäten sowie auf andere Vernetzer übertragen.

### Vergleichsbeispiel

Komponente A aus Ausführungsbeispiel 1, die auch von selbst mit der Zeit an der Luft aushärtet, wird ebenfalls in einer Dicke von ca. 5 mm und einer Fläche von ca. 10 x 10 cm auf eine Glasplatte aufgebracht. Die Masse härtet nur sehr langsam aus. Durch die großvolumige Anwendung tritt ein Gewichtsverlust von ca. 5 bis 6 % sowie ein hoher Schwund auf. Im Vergleich zu der Erfindung ist die mechanische Festigkeit wesentlich geringer.

## Patentansprüche

1. Kaltvulkanisierbare Siliconkautschukmasse aus zwei getrennt voneinander aufbewahrten Komponenten A und B, wobei
- die Komponente A ein Reaktionsprodukt aus einem bifunktionellen Siliconpolymer mit endständigen Hydroxylgruppen und einem im Verhältnis zum Siliconpolymer stöchiometrisch im Überschuß eingesetzten Vernetzer ist, und gegebenenfalls mindestens einen weiteren Zusatz aus der Gruppe Siliconweichmacher, Füllstoffe, Farbstoffe, Katalysatoren, Stabilisatoren, Haftvermittler und Emulgatoren enthält, und
- die Komponente B mindestens einen Hydroxylgruppen aufweisenden Bestandteil enthält, von dem mindestens einer ein bifunktionelles Siliconpolymer mit freien Hydroxylgruppen ist,
dadurch gekennzeichnet, daß als Vernetzer zur Herstellung der Komponente A Oximosilane verwendet werden, wie sie zur Herstellung von RTV-Silicon-Kautschuken bekannt sind, und daß der bei der Herstellung der Komponente A eingesetzte Überschuß an Vernetzer zur späteren Umsetzung mit der Komponente B in der Komponente A verbleibt.

2. Siliconkautschukmasse nach Anspruch 1, dadurch gekennzeichnet, daß der zur Herstellung der Komponente A eingesetzte Vernetzer in einer Menge vorgesehen ist, daß die in den Komponenten A und B enthaltenen Siliconpolymere vollständig umsetzbar sind.

3. Siliconkautschukmasse nach Anspruch 1 oder 2, dadurch gekennzeichnet, daß der Hydroxylgruppen aufweisende Bestandteil der Komponente B zusätzlich Wasser enthält.

4. Siliconkautschukmasse nach einem der vorhergehenden Ansprüche, dadurch gekennzeichnet, daß der Hydroxylgruppen aufweisende Bestandteil der Komponente B aus dem bifunktionellen Siliconpolymer mit endständigen Hydroxylgruppen und Wasser besteht.

5. Siliconkautschukmasse nach Anspruch 3 oder 4, dadurch gekennzeichnet, daß das im Hydroxylgruppen aufweisenden Bestandteil der Komponente B enthaltene Wasser im Siliconpolymer der Komponente B gelöst bzw. emulgiert ist.

6. Siliconkautschukmasse nach einem der vorhergehenden Ansprüche, dadurch gekennzeichnet, daß das zur Herstellung von Komponente A und/oder B verwendete Siliconpolymer flüssig oder fließfähig ist.

7. Siliconkautschukmasse nach einem der vorhergehenden Ansprüche, dadurch gekennzeichnet, daß die Komponente B zusätzlich Farbpaste enthält.

8. Siliconkautschukmasse nach einem der vorhergehenden Ansprüche, dadurch gekennzeichnet, daß das Siliconpolymer der Komponente B 0,5 - 5 Gew.% Wasser enthält.

9. Siliconkautschukmasse nach Anspruch 8, dadurch gekennzeichnet, daß das Siliconpolymer der Komponente B 1 - 2 Gew.% Wasser enthält.

10. Siliconkautschukmasse nach einem der vorhergehenden Ansprüche, dadurch gekennzeichnet, daß sie die Komponenten A und B in einem Mengenverhältnis von 20:1 bis 1:1 enthält.

11. Siliconkautschukmasse nach Anspruch 10, dadurch gekennzeichnet, daß sie die Komponenten A und B in einem Mengenverhältnis von 10:1 bis 10:6 enthält.

12. Verfahren zur Herstellung einer kaltvulkanisierbaren Siliconkautschukmasse nach einem der vorhergehenden Ansprüche, dadurch gekennzeichnet, daß
- das bifunktionelle Siliconpolymer mit endständigen Hydroxylgruppen, der im Verhältnis zum Siliconpolymer stöchiometrisch im Überschuß vorhandene Vernetzer und die ggf. weiteren Zusätze vermischt werden,
- getrennt davon ein bifunktionelles Siliconpolymer mit endständigen Hydroxylgruppen bereitgestellt und ggf. mit Wasser und/oder mit Farbpaste vermischt wird, und
- diese beiden Mischungen getrennt aufbewahrt werden.

13. Verwendung einer Siliconkautschukmasse nach einem der Ansprüche 1 bis 11 als Dichtungs-, Beschichtungs- und Verbindungsmasse.

## Claims

1. Cold vulcanizable silicone rubber composition formed from two separately stored components A and B, in which component A is a reaction product of a bifunctional silicone polymer with terminal hydroxyl groups and a crosslinking agent in stoichiometric excess compared with the silicone polymer and optionally at least one further addition from the group silicone plasticizers, fillers, dyes, catalysts, stabilizers, primers and emulsifiers and component B contains at least one constituent having hydroxyl groups, whereof at least one is a bifunctional silicone polymer with free hydroxyl groups, characterized in that as the crosslinking agent for producing component A use is made of oximosilanes, as are known for the production of RTV silicone rubbers, and that the crosslinking agent excess used in the production of component A remains in the latter for the subsequent reaction of component B.

2. Silicone rubber composition according to claim 1, characterized in that the crosslinking agent used for the production of component A is present in a quantity such that the silicone polymers contained in components A and B can be completely reacted.

3. Silicone rubber composition according to claim 1 or 2, characterized in that the constituent of component B having hydroxyl groups additionally contains water.

4. Silicone rubber composition according to any one of the preceding claims, characterized in that the constituent of component B having hydroxyl groups comprises the bifunctional silicone polymer with terminal hydroxyl groups and water.

5. Silicone rubber composition according to claim 3 or 4, characterized in that the water contained in the constituent of component B having hydroxyl groups is dissolved or emulsified in the silicone polymer of component B.

6. Silicone rubber composition according to any one of the preceding claims, characterized in that the silicone polymer used for the production of component A and/or B is liquid or flowable.

7. Silicone rubber composition according to any one of the preceding claims, characterized in that the component B additionally contains colouring paste.

8. Silicone rubber composition according to any one of the preceding claims, characterized in that the silicone polymer of component B contains 0.5 to 5% by weight water.

9. Silicone rubber composition according to claim 8, characterized in that the silicone polymer of component B contains 1 to 2% by weight water.

10. Silicone rubber composition according to any one of the preceding claims, characterized in that it contains components A and B in a quantity ratio of 20:1 to 1:1.

11. Silicone rubber composition according to claim 10, characterized in that it contains components A and B in a quantity ratio of 10:1 to 10:6.

12. Process for the production of a cold vulcanizable silicone rubber composition according to any one of the preceding claims, characterized in that the bifunctional silicone polymer with terminal hydroxyl groups, the crosslinking agent present in stoichiometric excess compared with the silicone polymer and the optional further additives are mixed, separately therefrom a bifunctional silicone polymer with terminal hydroxyl groups is prepared and optionally mixed water and/or with colouring paste and these two mixtures are stored separately.

13. Use of a silicone rubber composition according to any one of the claims 1 to 11 as a sealing, coating and joining composition.

## Revendications

1. Pâte de caoutchouc de silicone vulcanisable à froid constituée de deux composants A et B conservés séparément l'un de l'autre,
- le composant A est un produit réactionnel d'un polymère de silicone bifonctionnel à groupes hydroxyle en fin de chaîne et d'un réticulant utilisé en excédent stoechiométrique par rapport au polymère de silicone, et éventuellement d'au moins un autre additif du groupe comprenant des plastifiants de silicone, des charges, des colorants, des catalyseurs, des stabilisants, des agents adhésifs et des émulsifiants, et
- le composant B contient au moins un constituant présentant des groupes hydroxyle, au moins un de ces constituants étant un polymère de silicone bifonctionnel à groupes hydroxyle libres,
**caractérisée** en ce qu'on utilise comme réticulant pour la préparation du composant A des oximosilanes, tels qu'ils sont connus pour la préparation de caoutchoucs de silicone R.T.V. (vulcanisables à température ambiante), et en ce que l'excédent de réticulant utilisé pour la préparation du composant A reste dans le composant A en vue de sa réaction ultérieure avec le composant B.

2. Pâte de caoutchouc de silicone selon la revendication 1, **caractérisée** en ce que le réticulant utilisé pour la préparation du composant A est prévu dans une quantité permettant la transformation intégrale des polymères de silicone contenus dans les composants A et B.

3. Pâte de caoutchouc de silicone selon la revendication 1 ou 2, **caractérisée** en ce que le constituant du composant B présentant des groupes hydroxyle contient en outre de l'eau.

4. Pâte de caoutchouc de silicone selon l'une des revendications précédentes, **caractérisée** en ce que le constituant du composant B présentant des groupes hydroxyle est constitué du polymère de silicone bifonctionnel à groupes hydroxyle en fin de chaîne et d'eau.

5. Pâte de caoutchouc de silicone selon la revendication 3 ou 4, **caractérisée** en ce que l'eau contenue dans le constituant du composant B présentant des groupes hydroxyle est dissoute ou émulsionnée dans le polymère de silicone du composant B.

6. Pâte de caoutchouc de silicone selon l'une des revendications précédentes, **caractérisée** en ce que le polymère de silicone utilisé pour la préparation du composant A et/ou B est liquide ou fluide.

7. Pâte de caoutchouc de silicone selon l'une des revendications précédentes, **caractérisée** en ce que le composant B contient en outre une pâte colorante.

8. Pâte de caoutchouc de silicone selon l'une des revendications précédentes**, caractérisée** en ce que le polymère de silicone du composant B contient 0,5 à 5 % (en poids) d'eau.

9. Pâte de caoutchouc de silicone selon la revendication 8, **caractérisée** en ce que le polymère de silicone du composant B contient 1 à 2 % (en poids) d'eau.

10. Pâte de caoutchouc de silicone selon l'une des revendications précédentes, **caractérisée** en ce qu'elle contient les composants A et B dans un rapport de quantités de 20:1 à 1:1.

11. Pâte de caoutchouc de silicone selon la revendication 10, **caractérisée** en ce qu'elle contient les composants A et B dans un rapport de quantités de 10:1 à 10:6.

12. Procédé pour la préparation d'une pâte de caoutchouc de silicone vulcanisable à froid selon l'une des revendications précédentes, **caractérisé** en ce que
- on mélange le polymère de silicone bifonctionnel à groupes hydroxyle en fin de chaîne, le réticulant présent en excédent stoechiométrique par rapport au polymère de silicone et les éventuels autres additifs,
- on prépare séparément un polymère de silicone bifonctionnel à groupes hydroxyle en fin de chaîne, et on le mélange éventuellement à de l'eau et/ou à de la pâte colorante, et
- on conserve ces deux mélanges séparément l'un de l'autre.

13. Utilisation d'une pâte de caoutchouc de silicone selon l'une des revendications 1 à 11 comme pâte d'étanchéité, de revêtement ou d'assemblage.
